# EUROPÄISCHE PATENTSCHRIFT

(11) **EP 3 724 554 B1**
(45) Veröffentlichungstag und Bekanntmachung des Hinweises auf die Patenterteilung: **26.01.2022**
(21) Anmeldenummer: 18814545.2
(22) Anmeldetag: 30.11.2018
(51) Int. Cl.: F24F 13/20, F24F 7/08, F24F 12/00

(54) **LÜFTUNGSVORRICHTUNG UND VERFAHREN ZUM BETRIEB EINER SOLCHEN VORRICHTUNG**
VENTILATION DEVICE AND METHOD OF OPERATING THE SAME
DISPOSITIF DE VENTILATION ET MÉTHODE D'OPÉRER D'UN TEL DISPOSITIF

(30) Priorität: 11.12.2017 DE 202017006353 U
(43) Veröffentlichungstag der Anmeldung: 21.10.2020
(73) Patentinhaber: SIEGENIA-AUBI KG, 57234 Wilnsdorf (DE)
(72) Erfinder: BAUER, Marlena, 57271 Hilchenbach (DE); BECKER, Christoph, 57234 Wilnsdorf (DE); SASSMANNSHAUSEN, Jürgen, 57271 Hilchenbach (DE); STURM, Michael, 57223 Kreuztal (DE); GRÄBENER, Julian, 57234 Wilnsdorf (DE)
(86) Internationale Anmeldenummer: PCT/EP2018/083133
(87) Internationale Veröffentlichungsnummer: WO 2019/115254

(56) Entgegenhaltungen:
- WO-A2-2015/139885
- DE-A1- 3 602 120
- DE-U1-202012 010 671

## Beschreibung

Die Erfindung betrifft eine Lüftungsvorrichtung zur Be- und Entlüftung von mindestens einem Raum eines Gebäudes nach dem Oberbegriff des Anspruchs 1. Insbesondere bezieht sich die Erfindung dabei auf eine Lüftungsvorrichtung mit einer Wärmespeichereinheit zur Wärmeübertragung aus dem Entlüftungs- Medienstrom auf den Belüftungs- Medienstrom, mit einer Verschluss- und Öffnungseinrichtung zur Steuerung der Luftströmungswege, wobei in den Luftströmungswegen Filterelemente vorgesehen sind.

Lüftungsvorrichtungen dieser Art sind bereits bekannt durch die DE 3207761 A1. Die Erfindung beschreibt ein Be- und Entlüftungsgerät mit Rückgewinnung der Abluftwärme für Wohn- und Aufenthaltsräume, Büros, Schulen, Lager und Arbeitsräume mit einem kastenförmigen, auf der Wand und/oder in Zwischendecken montierbaren Gehäuse, wobei zwei Radialgebläse für die getrennte Zu- und Abführung der Luftströme vorgesehen sind. Für Zu- und Abluft wird je ein Speicherpaket als Wärmetauscher benutzt. Die Bleche der Speicherpakete stehen je nach Schaltzustand in direktem Kontakt mit der Zuluft oder der Abluft. Der Richtungswechsel der Luftströme erfolgt je nach dem thermischen Zustand der Speicherpakete bei kontinuierlich arbeitenden Radialgebläsen über eine ansteuerbare Luftklappe mit laufenden Änderungen des Geschwindigkeitsvektors der Luftströme innerhalb der Speicherpakete im grenzschichtnahen Bereich des Wärmeübergangs zwischen den Speicherpaketen und den Luftströmen.

Die Ausrichtung der Luftströme für Zu- und Abluft bei der bekannten Lüftungsvorrichtung sind für einen Luftaustausch aufgrund der Anordnung innerhalb der Lüftungsvorrichtung unzweckmäßig einer Seite zugeordnet, so dass außerhalb der Lüftungsvorrichtung mittels Kanalumlenkungen zusätzlich gearbeitet werden muss. Weitere Kanalumlenkungen bedürfen zusätzlichen Bauraums, was sich als hinderlich auswirken kann.

Des Weiteren ist aus dem Stand der Technik ein lufttechnisches Gerät nach DE 202012010671 U1 bekannt, welches zur Be- und Entlüftung von mindestens einem Raum eines Gebäudes vorgesehen ist. Das lufttechnische Gerät weist dazu zwei Luftkanäle auf, die jeweils eingangsseitig sowie ausgangsseitig je eine Kanalöffnung aufweisen und zwischen den zugehörigen Kanalöffnungen durch eine aufweisende Luftfördereinrichtung strömungstechnisch miteinander verbunden sind und mit einer Verschlusseinrichtung, die in einer ersten Betriebsart zur Ausbildung eines über die Luftfördereinrichtung führenden ersten Luftwegs eine Kanalöffnung des einen, ersten Luftkanals mit der einen Kanalöffnung des anderen zweiten Luftkanals strömungstechnisch verbindet. Ferner verbindet die Verschlusseinrichtung strömungstechnisch die in einer zweiten Betriebsart zur Ausbildung eines über die Luftfördereinrichtung führenden zweiten Luftwegs die andere Kanalöffnung des ersten Luftkanals mit der anderen Kanalöffnung des zweiten Luftkanals.

Die bekannte Lüftungsvorrichtung ist konstruktiv so gestaltet, dass die Verschlusseinrichtung aus einer Lüftungsschieber besteht, durch welche die jeweiligen Betriebsarten mit einer Drehbewegung gesteuert werden. Der zeitliche Ablauf zur Verstellung der Verschlusseinrichtung über die Lüftungsschieber in die gewählte Betriebsart verhält sich zyklisch, so dass ein Luftaustausch in diesem Zeitraum unterbrochen ist, was sich nachteilig auf den Luftaustausch und durch das immer wieder wechselnde Geräusch störend auf im Raum befindliche Personen auswirken kann. Außerdem wird der Wärmetauscher und auch das Filterelement wechselseitig durchströmt, wobei durch hälftiges Aufteilen der Luftdurchströmung des Be- und Entlüftungs- Medienstroms durch den Wärmetauscher hindurch, auch nur die Hälfte der verfügbaren Speicherkapazität in Benutzung ist, was sich nachteilig auf den Wärmerückgewinnungsgrad auswirkt. Weiterhin hat es sich als Nachteilig herausgestellt, dass das Filterelement wechselseitig von dem Be- und Entlüftungs- Medienstrom durchströmt wird. Bereits durch den Entlüftungs- Medienstrom aus dem Raum abgesaugte Schmutzpartikel werden wieder durch den Belüftungs- Medienstrom in den Raum eingeleitet.

Ebenfalls ist die WO 2015/139885 A2 bekannt geworden, welche eine Lüftungsvorrichtung zur Be- und Entlüftung von Räumen eines Gebäudes, mit einem Gehäuse aufweist. Die WO 2015/139885 A2 offenbart damit eine Lüftungsvorrichtung mit den Merkmalen des Oberbegriffs von Anspruch 1. Mit einer in einer Gebäudewand aufweisenden Seitenfläche, die zur Rauminnenseite und mit einer Seitenfläche zur Außenseite angeordnet ist. Weiter mit einem durch eine Luftfördereinrichtung in die Rauminnenseite hineinführenden Belüftungs- Medienstrom und einem aus der Rauminnenseite zur Außenseite hinausführenden Entlüftungs- Medienstrom, mit einer Wärmespeichereinheit zur Wärmeübertragung aus dem Entlüftungs- Medienstrom auf den Belüftungs-Medienstrom und mit einer Verschluss- und Öffnungseinrichtung zur Steuerung des Luftstroms. Wobei das Gehäuse in der Höhe durch einen Zwischenboden getrennt eine obere Ebene und eine untere Ebene formiert, und wobei das Gehäuse in der Länge in der oberen Ebene durch die Verschluss- und Öffnungseinrichtung und die untere Ebene mittels Trennwände geteilt sind, wodurch sich zwei obere Luftströmungskanäle und zwei untere Luftströmungskanäle bilden. Die Luftfördereinrichtung besteht dabei aus einem Zuluftgebläse für den Belüftungs-Medienstrom und aus einem Abluftgebläse für den Entlüftungs-Medienstrom und werden kontinuierlich in einer Luftförderrichtung betrieben und verbinden die obere Ebene mit der unteren Ebene.

Außerdem offenbart die DE 3602120 A1 ein Verfahren zum Betrieb einer Lüftungsvorrichtung zum Be- und Entlüften von Räumen eines Gebäudes, bei dem im Be- und Entlüftungs-Medienstrom Gebläse und Wärmespeicher vorgesehen sind. Durch eine wechselnde Durchströmung der Wärmespeicher wird ein Temperaturaustausch des Be- und Entlüftungs-Medienstroms erreicht, wobei die wechselnde Durchströmung der Wärmespeicher durch einen Tausch der Lüftungswege des Be- und Entlüftungs- Medienstroms in der oberen Ebene des Gehäuses der Lüftungsvorrichtung unter Beibehaltung der Förderrichtung der Gebläse erreicht wird und durch Beibehaltung der Luftströmungskanäle zu den Gebläsen der Be- und Entlüftungs- Medienstrom in der unteren Ebene gleichbleibend durchströmt wird.

Der Erfindung liegt nun die Aufgabe zugrunde, eine Lüftungsvorrichtung der eingangs erwähnten Art zu schaffen, die die Nachteile des Standes der Technik überwindet. Gleichzeitig soll mit der Lüftungsvorrichtung eine hohe Luftleistung, bei guter Schalldämmung, geringem Eigengeräusch und hohem Wärmerückgewinnungsgrad erreicht werden.

Zur Lösung dieses Problems wird erfindungsgemäß eine Lüftungsvorrichtung mit den Merkmalen von Anspruch 1 vorgeschlagen. Bevorzugte Ausführungsformen sind in den abhängigen Ansprüchen definiert. Erfindungsgemäß ist vorgesehen, dass das Gehäuse der Lüftungsvorrichtung in der Höhe durch einen Zwischenboden getrennt eine obere Ebene und eine untere Ebene formiert. Des Weiteren ist das Gehäuse in der Länge in der oberen Ebene durch die Verschluss- und Öffnungseinrichtung und in der unteren Ebene mittels Trennwänden geteilt ausgebildet, wodurch sich zwei obere Luftströmungskanäle und zwei untere Luftströmungskanäle bilden. Außerdem wird dabei die Luftfördereinrichtung aus einem Zuluftgebläse für den Belüftungs-Medienstrom und aus einem Abluftgebläse für den Entlüftungs- Medienstrom bestehend, kontinuierlich in einer Luftförderrichtung betrieben. Zuluftgebläse und Abluftgebläse verbinden die obere Ebene mit der unteren Ebene. Zudem weisen die oberen Luftströmungskanäle zur Seitenfläche des Gehäuses auf der oberen Ebene jeweils eine Wärmespeichereinheit auf, wobei zwischen der Wärmespeichereinheit und der Außenseite jeweils ein Zuluftfilterelement zugeordnet ist, welches in den Luftströmungskanälen kontinuierlich vollflächig wechselseitig und gegenläufig von dem Be- und Entlüftungs-Medienstrom durch die Verschluss- und Öffnungseinrichtung durchströmbar ist. Dabei werden die Luftströmungskanäle in der unteren Ebene durch den Be- und Entlüftungs- Medienstrom gleichbleibend durchströmt. Damit gelingt es, dass der aus der Rauminnenseite abgeführte Entlüftungs- Medienstrom und der in den Innenraum zugeführte Belüftungs- Medienstrom mit Einhaltung einer Druckstabilität einen gleichbleibenden Volumenstrom behalten. Aufgrund der Anordnung von zwei Wärmespeichern in der oberen Ebene, die wiederum durch die vorgeschalteten Verschluss- und Öffnungseinrichtungen getrennt voneinander im Wechsel schaltbar sind, kann ein gleichbleibend konstant anhaltender Be- und Entlüftungs- Medienstrom zur Außenseite und von der Außenseite zur Rauminnenseite bei nahezu permanent gleicher Leistung der Gebläse eingehalten werden.

Zur Effizienzsteigerung und Vollauslastung der Wärmerückgewinnungseinrichtung, sind erfindungsgemäß an der Seitenfläche zur Außenseite des Gehäuses auf der oberen Ebene für den wechselseitigen Be- und Entlüftungs- Medienstrom der oberen Luftströmungskanäle jeweils Ein- und Austrittsöffnungen vorgesehen, so dass mindestens zwei angeordnete Wärmespeichereinheiten im Betriebszustand kontinuierlich vollflächig an den jeweiligen Ein- und Austrittsöffnungen von dem Be- und/ oder Entlüftungs-Medienstrom wechselweise durchströmt werden. Somit kann sich der aus der Abluft von der Rauminnenseite erwärmte Entlüftungs- Medienstrom in dem gesamten Bereich des Wärmespeichers während des Durchströmens verteilen, die Wärme speichern und entsprechend mit einem Wechsel der Luftströmungsrichtung durch die Verschluss- und Öffnungseinrichtungen die gespeicherte Wärme ebenfalls durch den gesamten Querschnitt des Wärmespeichers an die gegenläufige Durchströmung der Luft des Belüftungs- Medienstrom wieder abgeben.

Erfindungsgemäß ist an der Seitenfläche zur Rauminnenseite des Gehäuses auf der unteren Ebene für den Belüftungs- Medienstrom des unteren Luftströmungskanals eine Austrittsöffnung und für den Entlüftungs- Medienstrom des unteren Luftströmungskanals eine Eintrittsöffnung vorgesehen. Aufgrund der Ausgestaltung der unteren Luftströmungskanäle, lässt sich auf der Rauminnenseite eine kontinuierliche Trennung des Belüftungs- Medienstrom und Entlüftungs- Medienstrom herstellen.

Um ein einfaches Reinigen oder ein Wechsel eines Filterelementes vornehmen zu können, ist zur Seitenfläche des Gehäuses im Bereich der Eintrittsöffnung des unteren Luftströmungskanals ein Abluftfilterelement angeordnet, welches permanent einseitig von dem Entlüftungs- Medienstrom durchströmt ist. Das Abluftfilterelement sorgt außerdem für einen von Schmutzpartikeln befreiten Entlüftungs- Medienstrom, für die in der Lüftungsvorrichtung durchströmten Bauteile. Somit wird ein mögliches Ansammeln von Schmutz in den Luftströmungskanälen und Wärmespeichereinheiten vermieden. Das Reinigen oder ein Wechsel des Abluftfilterelementes erfolgt durch einfaches Herausziehen von der Rauminnenseite eines als Kasten ausgebildeten Filterträgers, welcher in der unteren Ebene eines Luftführungsmoduls lagepositioniert ist.

Eine weitere vorteilhafte Ausgestaltung der Lüftungsvorrichtung wird dadurch bewirkt, dass das Zuluftgebläse in der unteren Ebene des Gehäuses angeordnet ist, während das Abluftgebläse der oberen Ebene des Gehäuses zugewandt ist. Die Art der Anordnung bietet für die jeweiligen Gebläse einen größtmöglichen Bauraum und eine sorgfältige Trennung der beiden Komponenten zur Luftförderung.

Für eine optimale Montage und eine Demontage von der Rauminnenseite, beispielweise zu

Reinigungszwecken, ist das Gehäuse bevorzugt über die Länge der Lüftungsvorrichtung in drei Abschnitte modular unterteilt, wobei der mittlere Abschnitt das Technikmodul und die äußeren Abschnitte jeweils das Luftführungsmodul bereitstellen. So bildet jede einzelne Komponente mit Verschieben im Gehäuse eine definierte Endposition, wobei sich gleichzeitig durch Teilung der Abschnitte das Gewicht der gesamten Lüftungsvorrichtung auf die Modul Komponenten verteilt, was sich als weiterer Vorteil auf die Montage und Demontage auswirkt.

Insbesondere im Technikmodul können mögliche Feinjustierungen der Lüftungsvorrichtung einfach durchgeführt werden. Dazu sind alle Funktions- und Einstellbauteile, wie die Verschluss- und Öffnungseinrichtung, das Ab- und Zuluftgebläse und eine Steuereinheit im Technikmodul angelegt. Vorzugsweise sind in dem Luftführungsmodul der Luftströmungskanal, die Wärmespeichereinheit und das Ab- und Zuluftfilterelement angeordnet. Die Wärmespeichereinheiten im Luftströmungskanal positioniert, nehmen bei konstanter Durchströmung der Luft, wie das die Ausgestaltung der Lüftungsvorrichtung vorgibt, die Temperatur der Luft an. Wird beispielsweise von der Außenseite der kühlere Belüftungs-Medienstrom eingesogen, kühlt sich die Wärmespeichereinheit ab. Mit anschließendem Durchströmen des Entlüftungs- Medienstroms von der Rauminnenseite nach draußen, kühlt die Wärmespeichereinheit den Entlüftungs- Medienstrom ab und erwärmt sich dabei. Bei abermaliger Umkehr der Luftdurchströmungsrichtung wirkt die Wärmespeichereinheit dann wie ein Wärmetauscher und erwärmt die eingesogene Luft und kühlt sich dabei wieder selbst ab. Gut geeignet für einen solchen Prozess ist eine Wärmespeichereinheit, die bevorzugt aus einer keramischen, einer metallischen oder aus einem Kunststoff gefertigten Speichermasse besteht und mehrere Kanäle umfasst. Die keramische, metallische oder aus Kunststoff bestehende Speichermasse weist eine hohe Wärmekapazität auf, da die Wärmespeichereinheiten der Lüftungsvorrichtung durch die regelmäßigen und übergangslosen Intervalle des Be- und Entlüftungs- Medienstroms mögliche Feuchtigkeitsbildung durch Erwärmung trocknen. Vorzugsweise sind die Wärmespeichereinheiten gleich ausgebildet, was einer Verwechslung bei einer Montage vorbeugt und was sich auf das Gleichgewichtsverhältnis für die Funktionalität während des Betriebszustandes der Lüftungsvorrichtung positiv auswirkt. Erfindungsgemäß wird ein Abluftfilterelement bei gleichbleibender Luftförderrichtung in der unteren Ebene von dem Entlüftungs- Medienstrom kontinuierlich durchströmt, wobei zwei weitere Zuluftfilterelemente in der oberen Ebene den Einrichtungen der Wärmerückgewinnung zur Außenseite vorstehend zyklisch von dem Be- und Entlüftungs- Medienstroms wechselseitig durchströmt werden. Das Abluftfilterelement wirkt einer Verschmutzung der Einrichtung der Wärmerückgewinnung der abgesaugten Luft von der Rauminnenseite entgegen, wobei sich die Standzeit bzw. die Lebensdauer erhöht. Alle luftdurchströmenden Bauteile wie die Luftströmungskanäle, die Wärmespeichereinheit, die Luftfördereinrichtung und auch die Verschluss- und Öffnungseinrichtung, sind durch die vorgeschalteten Filterelemente vor äußeren Einflüssen beispielsweise Schmutzpartikeln der Luft und /oder Pollen geschützt.

Nach einer Weiterbildung der Erfindung ist vorgesehen, dass die Unterteilung der Abschnitte für die Module mittels zweier Trennwände ermöglicht wird, wobei die Trennwände Luftströmungsausschnitte aufweisen, welche den Luftströmungskanälen angepasst ausgebildet ineinander wirkverbunden sind. Die Trennwände bieten mit dem Gehäuse, nach Art eines Schubladensystems, nach allen Seiten der Module eine vollständige Aufnahmemöglichkeit zur Montage und Demontage. Führungseinrichtungen zum vereinfachten Verschieben der Module an den Trennwänden sind ebenfalls denkbar. Außerdem gewinnt die Lüftungsvorrichtung auf die Länge durch die Trennwände an Stabilität des Grundgerüstes des Gehäuses.

Zur Erreichung eines geräuschlosen und nahezu übergangslosen Umschalten von dem Belüftungs- Medienstrom in den Entlüftungs- Medienstrom, weist die Verschluss- und Öffnungseinrichtung auf der oberen Ebene des Gehäuses angeordnet ein Schließorgan auf, welches vorzugsweise von einem Lüftungsschieber, zum Öffnen und Schließen der Luftströmungskanäle für den Be- und Entlüftungs- Medienstrom gebildet ist, wobei auf der unteren Ebene der Trennwand Öffnungen für einen permanenten Luftströmungsverlauf vorgesehen sind.

Ein weiteres vorteilhaftes Merkmal der Verschluss- und Öffnungseinrichtung sieht vor, dass die Lüftungsschieber zur Erzeugung einer nahezu kontinuierlichen Luftführung entsprechend schnell schließend und/ oder entsprechend schnell öffnend arbeitend über einen Zahnstangenantrieb betrieben sind. Dazu sind die Endlagestellungen der Lüftungsschieber, die gleichzeitig den Verschluss- oder einen Öffnungszustand der oberen Ebene zugeordneten Luftströmungskanäle bilden und damit den Be- und Entlüftungs- Medienstrom beeinflussen, auf den jeweiligen Seiten der Gebläse diagonal liegend beabstandet. Der Zahnstangenantrieb erhöht die Wirkung der Schließung beim Richtungswechsel der Lüftungsschieber und damit die Zuverlässigkeit des Antriebssystems der Lüftungsvorrichtung.

Zum Betätigen der Lüftungsschieber weist die Verschluss- und Öffnungseinrichtung vorzugsweise einen elektromotorischen Antrieb auf. In vorteilhafter Weise lassen sich die Lüftungsschieber mit je einem Antrieb getrennt voneinander ansteuern, so dass der Betriebszustand der Lüftungsvorrichtung zum Be- und Entlüften oder beispielweise zum kompletten Verschließen über eine Steuereinheit angewählt werden kann. Die Übertragung des Antriebs auf die Lüftungsschieber erfolgt über ein, die Steuereinheit wirkverbundenes Stirnrad, dass mit einem am Lüftungsschieber angeordneten Zahnstange wirkverbunden ist und eine geradlinige Hin- und Herbewegung des Lüftungsschiebers gestattet.

In einer bevorzugten Ausführungsform der Lüftungsvorrichtung ist vorgesehen, dass die Lüftungsschieber an den Seitenflächen des Gehäuses in einer Nut geführt aufgenommen sind und unmittelbar neben dem Zuluft- und Abluftgebläse angeordnet sind. Mit Schaltung der Verschluss- und Öffnungseinrichtung durch die Lüftungsschieber, befindet sich beispielsweise der erste Lüftungsschieber mit dem angeordnete erste Wärmespeichereinheit in dem Modus des Belüftungs- Medienstroms, wobei sich die zweite Wärmespeichereinheit zum anderen angeordneten Lüftungsschieber zur gleichen Zeit in dem Modus des Entlüftungs- Medienstroms aufhält. Die Lüftungsschieber wechseln nach jedem Schaltvorgang der Verschluss- und Öffnungseinrichtung von einer Seite zur anderen Seite des Gehäuses, sodass die angeordneten Wärmespeichereinheiten wechselseitig durchströmt werden.

In einer bevorzugten Ausführungsform ist vorgesehen, dass die Verschluss- und Öffnungseinrichtung ohne bauliche Veränderung an zwei Positionen ihren Einsatz findet. Damit erweist sich die Montage der Lüftungsvorrichtung als kostengünstig und einfach. Die Lüftungsschieber unterscheiden sich einzig durch ihre Schaltstellungen, die während des Betriebszustandes mit zyklischem Richtungswechsel zu den jeweiligen Seitenflächen des Gehäuses unterschiedliche Endlagestellungen aufweisen. So befindet sich der in einem ersten Betriebszustand auf der zu einer Mittelebene geteilten Hälfte der Lüftungsvorrichtung angeordnete Lüftungsschieber in der Endlagestellung des geöffneten Belüftungs- Medienstroms und durchströmt die eine Wärmespeichereinheit, wobei sich der auf der anderen Hälfte der Lüftungsvorrichtung angeordnete Lüftungsschieber in der Endlagestellung des geöffneten Entlüftungs-Medienstroms befindet und die andere Wärmespeichereinheit durchströmt. Mit Wechsel der Endlagestellungen der Lüftungsschieber stellt sich ein zweiter Betriebszustand ein, so dass die jeweiligen Wärmespeichereinheiten von der Gegenrichtung durch den Richtungswechsel des Be- und Entlüftungs- Medienstroms in der oberen Ebene durchströmt werden.

Mit Betätigung der Lüftungsschieber der Verschluss- und Öffnungseinrichtung über den elektromotorischen Antrieb, lassen sich die Lüftungsschieber über den Antrieb jeweils getrennt voneinander ansteuern, so dass der Betriebszustand der Lüftungsvorrichtung zum Be- und Entlüften oder beispielweise zum kompletten Verschließen eines Luftweges über die Steuereinheit angewählt werden kann, welche eine Platine aufweist, an der alle antreibenden Bauteile elektrisch verbunden sind. Bevorzugt sind alle elektronischen Bauteile und alle beweglich antreibenden Bauteile im Technikmodul angeordnet, so dass beispielweise zu Wartungszwecken der voranstehenden Komponenten nur das Technikmodul aus dem Gehäuse der Lüftungsvorrichtung zu entnehmen ist.

Nach einer Weiterbildung der Erfindung ist vorgesehen, dass die während des Betriebszustandes kontinuierlich in einer Drehrichtung arbeitenden Gebläse der Luftfördereinrichtung Radialventilatoren sind. Zur Erreichung eines Nennvolumenstroms, einer hohen Druckstabilität und einem möglichst gleichbleibenden Volumenstrom, ist der Einsatz der Radialventilatoren bevorzugt anzuwenden. Der kontinuierliche Betrieb führt außerdem zu relativ niedrigen Betriebskosten und schont die Luftfördereinrichtung, so dass diese verschleißarm und nahezu geräuschlos arbeitet.

Die lotrechte Mittelebene der Lüftungsvorrichtung bildet dabei bevorzugt die mittige Anordnung der räumlich getrennten Gebläse. Dabei sind die Gebläse auf der Mittelebene versetzt zueinander angeordnet und bieten ausreichend Platz für eine einfache Montage und für ausreichend Dämmmaterial zur Dämmung aber auch der Größenbestimmung der Gebläse, was ein niedriges Eigengeräusch und langer geführter Luftströmungskanäle mit aerodynamischem Verlauf zur schallabsorbierenden Wirkung ausmacht. Mit Beibehaltung des symmetrischen Aufbaus der Lüftungsvorrichtung auf der Mittelebene und durch die Anordnung des einen Gebläses zur einen Seitenfläche zur Außenseite des Gehäuses und des anderen Gebläses an der Seitenfläche zum Innenraum des Gehäuses, ergibt sich jeweils eine größtmögliche Entfernung zu den Filterelementen und zu den Wärmespeichereinheiten. Daraus resultiert neben günstigen Luftdurchströmungsverhältnissen auch eine längere Verweilzeit der Luftdurchströmung mit der damit verbundenen besseren Erwärmung des zugeführten Belüftungs- Medienstroms durch das Gehäuse.

In vorteilhafter Weise umrandet das Gehäuse der Lüftungsvorrichtung alle Funktionsbauteile, welche sich einfach und schnell verschiebbar lagefixiert montieren und demontieren lassen. Die integrierten Funktionsbauteile im Gehäuse, sind im eingebauten Zustand völlig verdeckt angeordnet. Mögliche Verschmutzungen, die zu einer Beeinträchtigung der Lebensdauer der Lüftungsvorrichtung beitragen können, werden durch die dichtende Verbindung des Gehäuses ausgeschlossen. Vereinfacht lassen sich auch die Filterelemente, welche dem Luftführungsmodul zugehören, für eine mögliche Wartung aus dem Gehäuse durch Verschieben ausbauen und gegebenenfalls reinigen.

Zur Erzielung einer erhöhten Schalldämmung und einer Ausnutzung des vorhandenen

Raumbedarfs für eine größtmögliche Auslastung der Funktionsbauteile, weist das Gehäuse erfindungsgemäß an der Seitenfläche zur Rauminnenseite die Austrittsöffnung für den Belüftungs- Medienstrom und die Eintrittsöffnung für den Entlüftungs- Medienstrom auf. An der Seitenfläche zur Außenseite des Gehäuses sind die Ein- und Austrittsöffnungen für den Be- und Entlüftungs- Medienstrom angeordnet.

Zudem betrifft die Erfindung ein Verfahren zum Betrieb einer Lüftungsvorrichtung mit den Merkmalen von Anspruch 16.

Weitere vorteilhafte Ausgestaltungen ergeben sich aus den Zeichnungen. Es zeigt:
- Fig.1: eine perspektivische Darstellung der Lüftungsvorrichtung mit Darstellung der Vorderansicht, Draufsicht und der Seitenansicht in einer Gebäudewand,
- Fig. 2: eine Draufsicht und eine Schnittdarstellung der Lüftungsvorrichtung nach Fig. 1 durch den Bereich der Wärmespeichereinheiten und Luftführungskanäle,
- Fig. 3: eine Schnittdarstellung einer Draufsicht der Lüftungsvorrichtung mit einem ersten zyklischen Verlauf einer Luftdurchströmung eines Be- und Entlüftungs-Medienstroms durch die jeweiligen Wärmespeichereinheiten in einer oberen Ebene,
- Fig. 4: eine Schnittdarstellung einer Draufsicht der Lüftungsvorrichtung mit einem ersten zyklischen Verlauf nach Fig. 3 einer Luftdurchströmung eines Be- und Entlüftungs- Medienstroms durch die jeweiligen Luftführungskanäle in einer unteren Ebene,
- Fig. 5: eine Schnittdarstellung einer Draufsicht der Lüftungsvorrichtung mit einem zweiten zyklischen Verlauf einer Luftdurchströmung eines Be- und Entlüftungs-Medienstroms durch die jeweiligen Wärmespeichereinheiten in einer oberen Ebene,
- Fig. 6: eine Schnittdarstellung einer Draufsicht der Lüftungsvorrichtung mit einem zweiten zyklischen Verlauf nach Fig. 5 einer Luftdurchströmung eines Be- und Entlüftungs- Medienstroms durch die jeweiligen Luftführungskanäle in einer unteren Ebene,
- Fig. 7: einen vergrößerten Ausschnitt der Schnittdarstellung in einer Draufsicht des mittleren Abschnitts der Lüftungsvorrichtung nach Fig. 3 eines Technikmoduls,
- Fig. 8: einen vergrößerten Ausschnitt der Schnittdarstellung in einer Draufsicht des mittleren Abschnitts der Lüftungsvorrichtung nach Fig. 5 eines Technikmoduls,
- Fig. 9: eine Vorderansicht der Lüftungsvorrichtung nach Fig. 1 zur Rauminnenseite mit Schnittangaben nach Fig. 5 bis Fig. 8 und
- Fig. 10: Schnittdarstellungen mit Seitenansicht der Lüftungsvorrichtung nach Fig. 9.

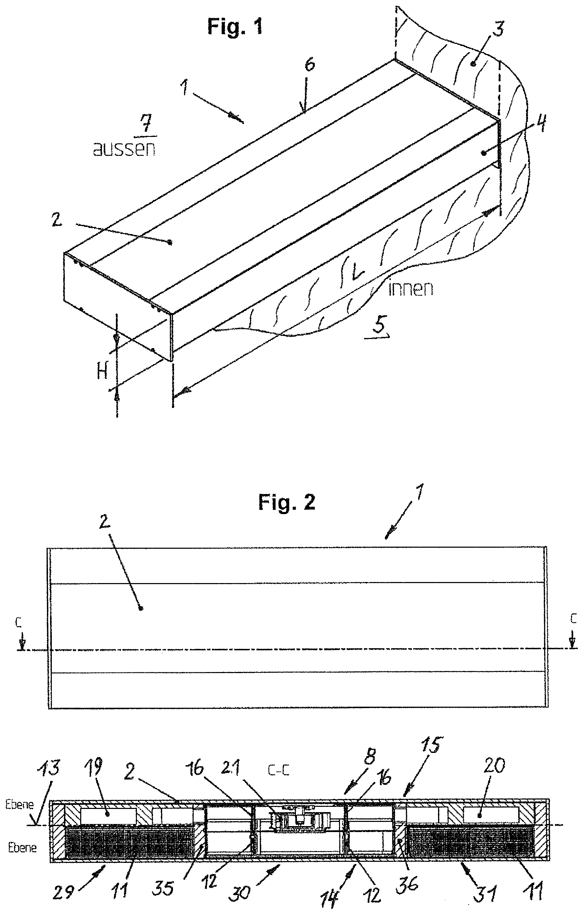

Fig. 1 der Zeichnung zeigt eine perspektivische Darstellung der Lüftungsvorrichtung 1 mit einem Gehäuse 2 zum gleichzeitigen Be- und Entlüften von Räumen. Die Lüftungsvorrichtung 1 lässt sich nach Fig. 1 vorzugsweise von der Rauminnenseite 5 oder aber auch nach Bedarf von der Außenseite 7 in einer Gebäudewand 3 befestigen, die insbesondere als Fassadenwand ausgebildet sein kann. Dabei weist die Gebäudewand 3 zur Außenseite 7 einen Durchbruch auf, der ebenfalls für ein Fenster oder eine Tür gedacht ist. Die Lüftungsvorrichtung 1 kann auch in einem eigens konzipierten Durchbruch in der Gebäudewand 3 verwendet werden.

Des Weiteren zeigt die Fig. 1 und Fig. 2, dass das Gehäuse 2 der Lüftungsvorrichtung 1 in der Höhe H durch einen Zwischenboden 13 getrennt eine obere Ebene 14 und eine untere Ebene 15 formiert, wobei sich der Zwischenboden 13 dreigeteilt ausbildet. Das Gehäuse 2 nach Fig. 2 ist der Gesamtlänge L nach nochmals in der oberen Ebene 14 durch die Verschluss- und Öffnungseinrichtung 12 und in der unteren Ebene 15 mittels Trennwänden 16 geteilt, woraus zwei obere Luftströmungskanäle 17, 18 und zwei untere Luftströmungskanäle 19, 20 resultieren.

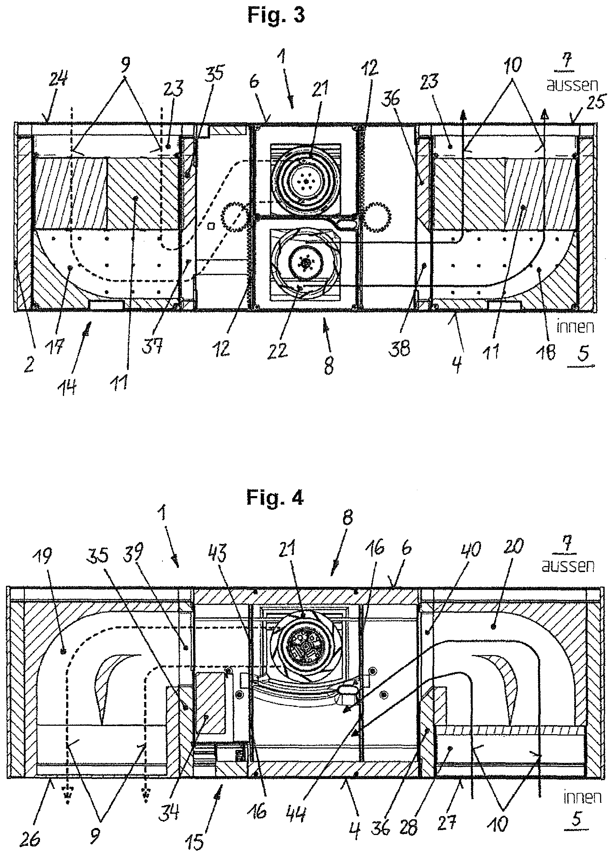

Ausgehend der Fig. 3 bis 8 wird dabei die Luftfördereinrichtung 8 aus einem Zuluftgebläse 21 für den Belüftungs-Medienstrom 9 und aus einem Abluftgebläse 22 für den Entlüftungs-Medienstrom 10 bestehend, kontinuierlich in einer Luftförderrichtung betrieben und verbinden die obere Ebene 14 mit der unteren Ebene 15 für den Luftstrom. Zudem weisen die oberen Luftströmungskanäle 17, 18 zur Seitenfläche 6 des Gehäuses 2 auf der oberen Ebene 14 jeweils eine Wärmespeichereinheit 11 auf. Zwischen der Wärmespeichereinheit 11 und der

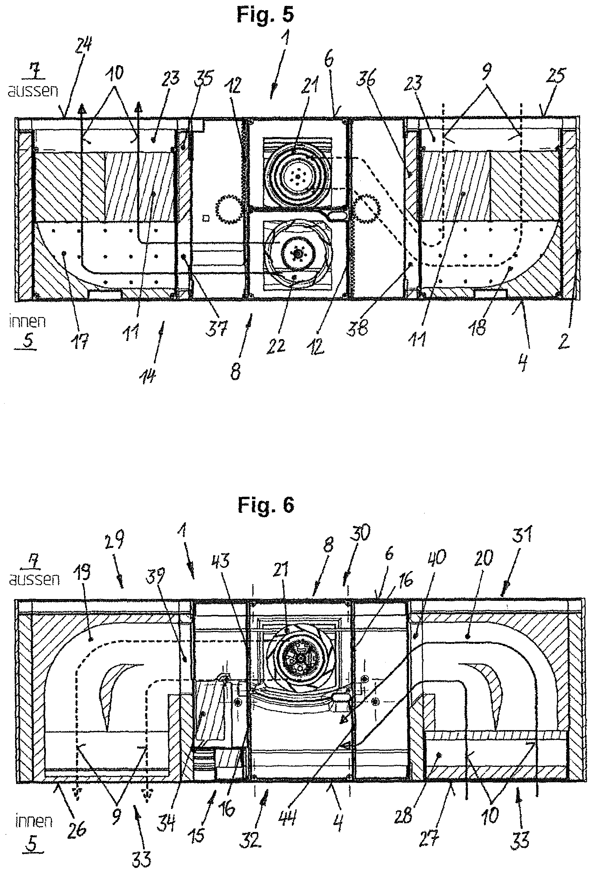

Außenseite 7 des Gebäudes der oberen Ebene 14 nach Fig. 3 und 5, sind jeweils Zuluftfilterelemente 23 zugeordnet, welche in den Luftströmungskanälen 17, 18 kontinuierlich vollflächig wechselseitig und gegenläufig von dem Be- und Entlüftungs- Medienstrom 9, 10 mit vorgeschalteter Verschluss- und Öffnungseinrichtung 12 durchströmbar sind. Dabei werden die Luftströmungskanäle 19, 20 in der unteren Ebene 15 nach Fig. 4 und Fig. 6 durch den Be- und Entlüftungs- Medienstrom 9, 10 gleichbleibend durchströmt. Damit gelingt es, dass aus der Rauminnenseite 5 abgeführte Entlüftungs- Medienstrom 10 und der in den Innenraum 5 zugeführte Belüftungs- Medienstrom 9 mit Einhaltung einer Druckstabilität einen gleichbleibenden Volumenstrom behalten. Aufgrund der Anordnung von zwei Wärmespeichereinheiten 11 in der oberen Ebene 14 nach Fig. 3 und 5, die wiederum durch die vorgeschalteten Verschluss- und Öffnungseinrichtungen 12 getrennt voneinander im Wechsel schaltbar sind, kann ein gleichbleibend konstant anhaltender Be- und Entlüftungs- Medienstrom 9, 10 zur Außenseite 7 und von der Außenseite 7 zur Rauminnenseite 5, bei nahezu permanent gleicher Leistung der Gebläse 21, 22, eingehalten werden.

Zur Effizienzsteigerung und Vollauslastung der Wärmerückgewinnungseinrichtung, sind in der Lüftungsvorrichtung 1 an der Seitenfläche 6 zur Außenseite 7 des Gehäuses 2 auf der oberen Ebene 14 nach Fig. 3 und 5 für den wechselseitigen Be- und Entlüftungs- Medienstrom 9, 10 der oberen Luftströmungskanäle 17, 18 jeweils Ein- und Austrittsöffnungen 24, 25 vorgesehen, so dass die mindestens zwei angeordneten Wärmespeichereinheiten 11 im Betriebszustand kontinuierlich vollflächig an den jeweiligen Ein- und Austrittsöffnungen 24, 25 von dem Be- und/ oder Entlüftungs- Medienstrom 9, 10 wechselweise durchströmt werden. Somit kann sich der aus der Abluft von der Rauminnenseite 5 erwärmte Entlüftungs- Medienstrom 10 in dem gesamten Bereich der Wärmespeichers 11 während des Durchströmens verteilen, die Wärme speichern und entsprechend mit einem Wechsel der Luftströmungsrichtung durch die Verschluss- und Öffnungseinrichtungen 12 von Fig. 3 in Fig. 5 die gespeicherte Wärme ebenfalls durch den gesamten Querschnitt des Wärmespeichers 11 an die gegenläufige Durchströmung der Luft des Belüftungs- Medienstrom 9 wieder abgeben.

Nach Fig. 4 und 6 ist an der Seitenfläche 4 zur Rauminnenseite 5 des Gehäuses 2 auf der unteren Ebene 15 für den Belüftungs- Medienstrom 9 des unteren Luftströmungskanals 19 eine Austrittsöffnung 26 und für den Entlüftungs- Medienstrom 10 des unteren Luftströmungskanals 20 eine Eintrittsöffnung 27 vorgesehen. Mittels der unteren Luftströmungskanäle 19, 20, wird auf der Rauminnenseite 5 eine kontinuierliche Trennung des Belüftungs- Medienstroms 9 und Entlüftungs- Medienstroms 10 hergestellt.

Zur Seitenfläche 4 des Gehäuses 2 ist im Bereich der Eintrittsöffnung 27 des unteren Luftströmungskanals 20 nach Fig. 4 und 5 ein Abluftfilterelement 28 angeordnet, welches permanent von einer Seite von dem Entlüftungs- Medienstrom 10 durchströmt ist. Das Abluftfilterelement 28 sorgt außerdem für einen von Schmutzpartikeln befreiten Entlüftungs-Medienstrom 10, für die in der Lüftungsvorrichtung 1 durchströmten Bauteile. Somit wird ein mögliches Ansammeln von Schmutz in den Luftströmungskanälen 17, 18, 20 und Wärmespeichereinheiten 11 vermieden. Durch einfaches Herausziehen von der Rauminnenseite eines als Kasten ausgebildeten nicht dargestellten Filterträgers, welcher in der unteren Ebene eines Luftführungsmoduls lagepositioniert ist, kann das Reinigen oder ein Wechsel des Abluftfilterelementes 28 erfolgen.

Ferner ist das Zuluftgebläse 21 nach Fig. 4 und 6 in der unteren Ebene 15 des Gehäuses 2 angeordnet, während das Abluftgebläse 22 nach Fig. 3 und 5 der oberen Ebene 14 des Gehäuses 2 zugewandt ist. Die Unterteilung auf die jeweiligen Ebenen 14, 15 bietet den Gebläsen 21, 22 die volle Auslastung der Leistungskraft bei größtmöglicher Ausgestaltung der Gebläse 21, 22.

In Verbindung mit der Fig. 2 wird auch noch deutlich, dass beispielweise zu Reinigungszwecken von der Rauminnenseite 5 das Gehäuse 2 über die Länge L der Lüftungsvorrichtung 1 in drei Abschnitte 29, 30, 31 modular unterteilt ist, wobei der mittlere Abschnitt 30 das Technikmodul 32 und die äußeren Abschnitte 29, 31 jeweils das Luftführungsmodul 33 bereitstellen. So ist jeder einzelne Abschnitt 29, 30, 31 in das Gehäuse 2 verschiebbar zuführbar mit Bedarf herausnehmbar gelagert. Durch Teilung der Abschnitte 29, 30, 31 teilt sich das Gewicht auf die Komponenten auf, was sich als weiterer Vorteil der Montage und Demontage darstellt.

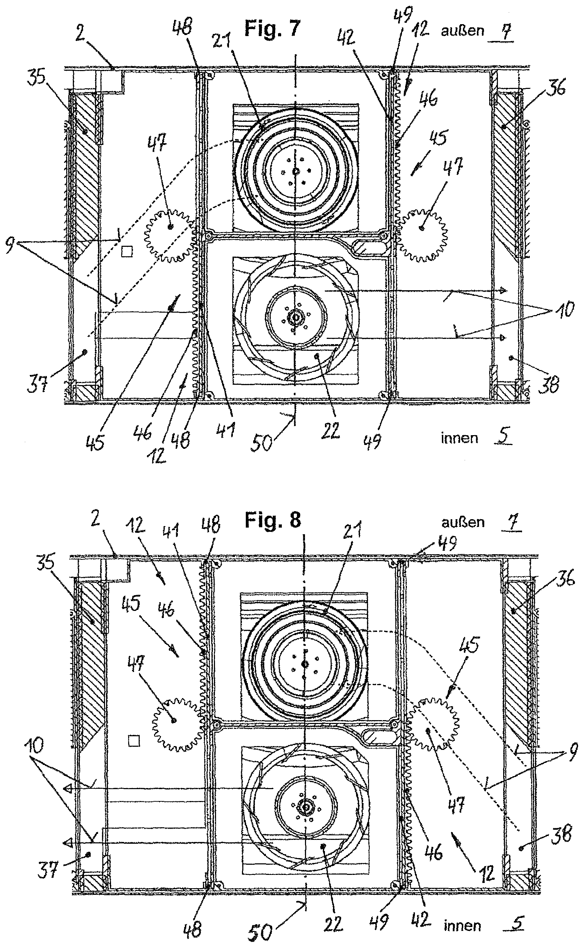

Insbesondere im Technikmodul 32 nach Fig. 7 und 8 können mögliche Feinjustierungen der Lüftungsvorrichtung 1 einfach durchgeführt werden. Dazu sind alle Funktions- und Einstellbauteile, wie die Verschluss- und Öffnungseinrichtung 12, das Ab- und Zuluftgebläse 21, 22 und eine Steuereinheit 34 mit einer Platine zum Anschluss von elektromotorischen Antrieben und Sensoren im Technikmodul 32 angelegt. Vorzugsweise sind in dem Luftführungsmodul 33 nach Fig. 3 bis 6 der Luftströmungskanal 17, 18, 19, 20, die Wärmespeichereinheit 11 und das Ab- und Zuluftfilterelement 23, 28 angeordnet. Die Wärmespeichereinheiten 11 im Luftströmungskanal 17, 18, 19, 20 positioniert, nehmen bei konstanter Durchströmung der Luft, wie das die Ausgestaltung der Lüftungsvorrichtung 1 vorgibt, die Temperatur der Luft an. Wird beispielsweise von der Außenseite 7 der kühlere Belüftungs- Medienstrom 9 eingesogen, kühlt sich die Wärmespeichereinheit 11 ab. Mit anschließendem Durchströmen des Entlüftungs-Medienstroms 10 von der Rauminnenseite 5 nach draußen auf die Außenseite 7, kühlt die Wärmespeichereinheit 11 den Entlüftungs- Medienstrom 10 ab und erwärmt sich dabei. Bei abermaliger Umkehr der Luftdurchströmungsrichtung wirkt die Wärmespeichereinheit 11 dann wie ein Wärmetauscher, erwärmt die eingesogene Luft und kühlt sich dabei wieder selbst ab. Gut geeignet für einen solchen Prozess ist eine Wärmespeichereinheit 11, der aus einer keramischen oder einer metallischen Speichermasse besteht und mehrere Kanäle umfasst. Die keramische, metallische oder aus einem Kunststoff aufweisende Speichermasse, erreicht aufgrund der Materialwahl und der Formgebung eine hohe Wärmekapazität. Durch die regelmäßigen und übergangslosen Intervalle des Be- und Entlüftungs- Medienstroms 9, 10, werden die Wärmespeichereinheiten 11 der Lüftungsvorrichtung 1 bei möglicher Feuchtigkeitsbildung aufgrund der hohen Wärmeaufnahme durch Erwärmung getrocknet. Vorzugsweise sind die Wärmespeichereinheiten 11 nach Fig. 3 und 5 in der Draufsicht und in Fig. 2 in der Vorderansicht gezeigt, gleich ausgebildet, was einer Verwechslung bei einer Montage vorbeugt und was sich auf das Gleichgewichtsverhältnis für die Funktionalität während des Betriebszustandes der Lüftungsvorrichtung 1 positiv auswirkt. Es können im Luftströmungskanal 17, 18, 19, 20 je nach Bedarf auch mehrere Wärmespeichereinheiten 11 aufgeteilt angeordnet werden.

Aus der Fig. 4 und 6 wird ferner deutlich, dass das Abluftfilterelement 28 bei gleichbleibender Luftförderrichtung in der unteren Ebene 15 von dem Entlüftungs- Medienstrom 10 kontinuierlich durchströmt wird, wobei zwei weitere Zuluftfilterelemente 23 nach Fig. 3 und 5 in der oberen Ebene 14 den Einrichtungen der Wärmerückgewinnung zur Außenseite 7 voranstehend zyklisch von dem Be- und Entlüftungs- Medienstrom 9, 10 wechselseitig durchströmt werden. Das Abluftfilterelement 28 wirkt einer Verschmutzung der Einrichtung der Wärmerückgewinnung der abgesaugten Luft von der Rauminnenseite 5 entgegen, wobei die Zuluftfilterelemente 23 durch den ständigen Wechsel der Luftförderrichtung selbstreinigend sind. Alle luftdurchströmenden Bauteile wie die Luftströmungskanäle 17, 18, 19, 20, die Wärmespeichereinheit 11, die Luftfördereinrichtung 8 und auch die Verschluss- und Öffnungseinrichtung 12, sind durch die vorgeschalteten Filterelemente 23, 28 vor äußeren Einflüssen, beispielsweise Schmutzpartikeln der Luft und /oder Pollen, geschützt.

Gemäß den Fig. 2 bis 8 findet eine Unterteilung der Abschnitte 29, 30, 31 mittels zweier Trennwände 35, 36 statt, wobei die Trennwände 35, 36 Luftströmungsausschnitte 37, 38, 39, 40 aufweisen, welche den Luftströmungskanälen 17, 18, 19, 20 angepasst übergehend wirkverbunden sind. Die Trennwände 35, 36 sind mit dem Gehäuse form- und/ oder kraftschlüssig verbunden und bieten mit dem Gehäuse 2, nach Art eines Schubladensystems, nach allen Seiten der Module 32, 33 eine vollständige Aufnahmemöglichkeit zur Montage und Demontage. Führungseinrichtungen zum vereinfachten Verschieben der Module 32, 33 an den Trennwänden 35, 36 sind ebenfalls denkbar.

Ein geräuschloses und nahezu übergangsloses Umschalten von dem Belüftungs- Medienstrom 9 in den Entlüftungs- Medienstrom 10, weist die Verschluss- und Öffnungseinrichtung 12 auf der oberen Ebene 14 des Gehäuses 2 angeordnet nach Fig. 7 und 8 durch ein Schließorgan auf, welches von einem Lüftungsschieber 41, 42 zum Öffnen und Schließen der Luftströmungskanäle 17, 18 für den Be- und Entlüftungs- Medienstrom 9, 10 gebildet ist. Auf der unteren Ebene 15 der Trennwand 16 sind nach Fig. 4 und 6 hingegen Öffnungen 43, 44 für einen permanenten Luftströmungsverlauf vorgesehen.

Bei der in Fig. 7 und 8 dargestellten Verschluss- und Öffnungseinrichtung 12 ist vorgesehen, dass die Lüftungsschieber 41, 42 zur Erzeugung einer nahezu kontinuierlichen Luftführung entsprechend schnell schließend und/ oder entsprechend schnell öffnend arbeitend über einen Zahnstangenantrieb 45 betrieben sind. Dazu sind die Endlagestellungen der Lüftungsschieber 41, 42, die gleichzeitig den Verschluss- oder einen Öffnungszustand der oberen Ebene 14 zugeordneten Luftströmungskanäle 17, 18 bilden und damit den Be- und Entlüftungs-Medienstrom beeinflussen, auf den jeweiligen Seiten der Gebläse 21, 22 diagonal liegend beabstandet. Der Zahnstangenantrieb 45 erhöht die Wirkung der Schließung beim Richtungswechsel der Lüftungsschieber 41, 42 und damit die Zuverlässigkeit des Antriebssystems der Lüftungsvorrichtung 1.

Weiter nach den Fig. 7 und 8 weist zum Betätigen der Lüftungsschieber 41, 42 die Verschluss- und Öffnungseinrichtung 12 vorzugsweise einen elektromotorischen Antrieb auf, der in direkter Verbindung mit einem Stirnrad 47 steht. Die Lüftungsschieber 41, 42 lassen sich durch jeweilige Anordnung eines Antriebs an jedem Stirnrad 47 getrennt voneinander ansteuern, so dass der Betriebszustand der Lüftungsvorrichtung 1 zum Be- und Entlüften oder beispielweise zum kompletten Verschließen eines Luftweges über die Steuereinheit 34 angewählt werden kann. Die Übertragung des Antriebs auf die Lüftungsschieber 41, 42, erfolgt somit über das mit der Steuereinheit 34 wirkverbundene Stirnrad 47, das wiederum mit der am Lüftungsschieber 41, 42 angeordneten Zahnstange 46 wirkverbunden ist und eine geradlinige Hin- und Herbewegung des Lüftungsschiebers 41, 42 gestattet.

Die Lüftungsschieber 41, 42 werden nach Fig. 7 und 8 von einem an den Seitenflächen 4, 6 des Gehäuses 2 in einer Nut 48, 49 verschiebbar geführt aufgenommen und sind unmittelbar neben dem Zuluft- und Abluftgebläse 21, 22 angeordnet. Mit Schaltung der Verschluss- und Öffnungseinrichtung 12 durch die Lüftungsschieber 41, 42, befindet sich beispielsweise der erste Lüftungsschieber 41 mit der angeordneten ersten Wärmespeichereinheit 11 nach Fig. 7 in dem Modus des Belüftungs- Medienstroms 9, wobei sich die zweite Wärmespeichereinheit 11 zum anderen angeordneten Lüftungsschieber 42 zur gleichen Zeit in dem Modus des Entlüftungs- Medienstroms 10 aufhält. Die Lüftungsschieber 41, 42 wechseln nach jedem Schaltvorgang der Verschluss- und Öffnungseinrichtung 12 von einer Seite 4 zur anderen Seite 6 des Gehäuses 2, sodass die angeordneten Wärmespeichereinheiten 11 wechselseitig durchströmt werden.

Nach Fig. 3 bis 8 findet die Verschluss- und Öffnungseinrichtung 12 ohne bauliche Veränderung an zwei fixen Positionen neben den Gebläsen 21, 22 seinen Einsatz. Die Lüftungsschieber 41, 42 weisen während des Betriebszustandes mit zyklischem Richtungswechsel zu den jeweiligen Seitenflächen 4, 6 des Gehäuses 2 unterschiedliche Endlagestellungen auf. Während sich der in einem ersten Betriebszustand auf der zu einer Mittelebene 50 geteilten Hälfte der Lüftungsvorrichtung 1 angeordnete Lüftungsschieber 41 in der Endlagestellung des geöffneten Belüftungs- Medienstroms 9 befindet und die eine Wärmespeichereinheit 11 durchströmt, sorgt der auf der anderen Hälfte der Lüftungsvorrichtung 1 angeordnete Lüftungsschieber 42 in der Endlagestellung des geöffneten Entlüftungs- Medienstroms 10 für ein Durchströmen der anderen Wärmespeichereinheit 11. Mit Wechsel der Endlagestellungen der Lüftungsschiebern 41, 42 stellt sich ein zweiter Betriebszustand ein, so dass die jeweiligen Wärmespeichereinheiten 11 von der Gegenrichtung durch den Richtungswechsel des Be- und Entlüftungs- Medienstroms 9, 10 in der oberen Ebene 14 durchströmt werden.

Der an den jeweilig aufweisenden Lüftungsschiebern 41, 42 angeordneter, nicht in den Figuren aufgezeigte, elektromotorische Antrieb, steuert die Lüftungsschieber 41, 42 getrennt voneinander, so dass der Betriebszustand der Lüftungsvorrichtung zum Be- und Entlüften oder beispielweise zum kompletten Verschließen über die Steuereinheit 34 angewählt werden kann. Die Steuereinheit 34 weist dazu eine Platine auf, an der alle antreibenden Bauteile elektrisch verbunden sind. Alle elektronischen Bauteile z.B. auch Sensoren und alle beweglich antreibenden Bauteile sind im Technikmodul 32 angeordnet, so dass beispielweise zu Wartungszwecken der voranstehenden Komponenten nur das Technikmodul 32 von einem autorisierten Fachmann aus dem Gehäuse 2 der Lüftungsvorrichtung 1 entnommen werden kann.

Die während des Betriebszustandes kontinuierlich in einer Drehrichtung arbeitenden Gebläse 21, 22 der Luftfördereinrichtung 8 sind Radialventilatoren, welche einen geeigneten Nennvolumenstrom, eine hohe Druckstabilität und einen möglichst gleichbleibenden Volumenstrom erreichen. Der kontinuierliche Betrieb führt außerdem zu relativ niedrigen Betriebskosten und schont die Luftfördereinrichtung, so dass diese verschleißarm und nahezu geräuschlos arbeitet.

Eine lotrechte Mittelebene 50 der Lüftungsvorrichtung 1 nach Fig. 7 und 8, bildet dabei die mittige Anordnung der räumlich getrennten Gebläse 21, 22. Dabei sind die Gebläse 21, 22 auf der Mittelebene 50 versetzt zueinander angeordnet und bieten ausreichend Platz für eine einfache Montage und für ausreichend Dämmmaterial zur Dämmung, aber auch der Größenbestimmung der Gebläse 21, 22, womit ein niedriges Eigengeräusch der Gebläse 21, 22 und ein lang geführter Verlauf der Luftströmungskanäle 17, 18, 19, 20 mit aerodynamischem Verlauf zur schallabsorbierenden Wirkung erreicht wird. Das Dämmmaterial kleidet damit die Luftströmungskanäle 17, 18, 19, 20 aus bzw. bildet die Luftströmungskanäle 17, 18, 19, 20. Außerdem wird die Gehäuseschale des Gehäuses 2 an der Innenseite zumindest teilweise mit einem Dämmmaterial verkleidet. Durch die Dämmung wirkt sich die Lüftungsvorrichtung 1 akustisch - zur Vermeidung der Übertragung von Körperschall, sowie Geräusche von der Außenseite -, mechanisch und thermisch dämpfend aus.

Mit Beibehaltung des symmetrischen Aufbaus der Lüftungsvorrichtung 1 auf der Mittelebene 50 und durch die Anordnung des einen Gebläses 21 zur Seitenfläche 6 und des anderen Gebläses 22 an der Seitenfläche 4 des Gehäuses 2, ergibt sich jeweils eine größtmögliche Entfernung zu den Filterelementen 23, 28 und zu den Wärmespeichereinheiten 11.

Gemäß der Fig. 1 und 2 umhüllt das Gehäuse 2 schützend und kompakt alle Funktionsbauteile der Lüftungsvorrichtung 1, welche sich einfach und schnell im Gehäuse 2 verschiebbar lagefixiert montieren und demontieren lassen. Die integrierten Funktionsbauteile im Gehäuse 2 sind im eingebauten Zustand völlig verdeckt angeordnet. Mögliche Verschmutzungen, die zu einer Beeinträchtigung der Lebensdauer der Lüftungsvorrichtung beitragen können, werden durch die dichtende Verbindung des Gehäuses ausgeschlossen. Vereinfacht lassen sich auch die Filterelemente 23, 28, welche dem Luftführungsmodul 33 zugehören, durch Trennung des Technikmoduls 32 auch von nicht fachbezogenen Personen für eine mögliche Wartung aus dem Gehäuse 2 durch ein Verschieben ausbauen und gegebenenfalls reinigen.

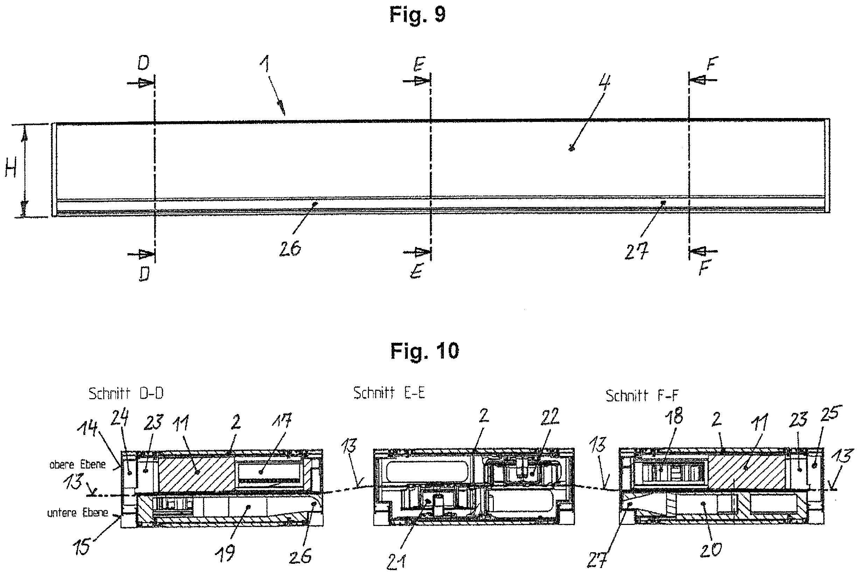

In den Fig. 3 bis 6 und Fig. 10 weist das Gehäuse 2 an der Seitenfläche 4 zur Rauminnenseite 5 die Austrittsöffnung 26 für den Belüftungs- Medienstrom 9 und die Eintrittsöffnung 27 für den Entlüftungs- Medienstrom 10 auf. An der Seitenfläche 6 des Gehäuses 2 zur Außenseite 7 gerichtet, sind jeweils die Ein- und Austrittsöffnungen 24 und 25 für den Be- und Entlüftungs-Medienstrom 9, 10 angeordnet.

Zusammengefasst ergibt sich ein Verfahren zum Betrieb einer Lüftungsvorrichtung 1 zum Be- und Entlüften von Räumen eines Gebäudes, bei dem im Be- und Entlüftungs- Medienstrom 9, 10 Gebläse 21, 22 und Wärmespeichereinheiten 11 vorgesehen sind, wobei durch eine wechselnde Durchströmung der Wärmespeichereinheiten 11 ein Temperaturaustausch des Be- und Entlüftungs- Medienstroms 9, 10 erreicht wird, dass die wechselnde Durchströmung der Wärmespeichereinheiten 11 durch einen Tausch der Lüftungswege des Be- und Entlüftungs-Medienstroms 9, 10 in der oberen Ebene 14 des Gehäuses 2 der Lüftungsvorrichtung 1 unter Beibehaltung der Förderrichtung der Gebläse 21, 22 erreicht wird und durch Beibehaltung der Luftströmungskanäle 19, 20 zu den Gebläsen 21, 22 der Be- und Entlüftungs- Medienstrom 9, 10 in der unteren Ebene 15 gleichbleibend durchströmt wird.

### Bezugszeichenliste

- 1: Lüftungsvorrichtung
- 2: Gehäuse
- 3: Gebäudewand
- 4: Seitenfläche
- 5: Rauminnenseite
- 6: Seitenfläche
- 7: Außenseite
- 8: Luftfördereinrichtung
- 9: Belüftungs- Medienstrom
- 10: Entlüftungs- Medienstrom
- 11: Wärmespeichereinheit
- 12: Verschluss- und Öffnungseinrichtung
- H: Höhe
- 13: Zwischenboden
- 14: Ebene oben
- 15: Ebene unten
- L: Länge
- 16: Trennwand
- 17: Luftströmungskanal
- 18: Luftströmungskanal
- 19: Luftströmungskanal
- 20: Luftströmungskanal
- 21: Zuluftgebläse
- 22: Abluftgebläse
- 23: Zuluftfilterelement
- 24: Ein- und Austrittsöffnung
- 25: Ein- und Austrittsöffnung
- 26: Austrittöffnung
- 27: Eintrittsöffnung
- 28: Abluftfilterelement
- 29: Abschnitt außen
- 30: Abschnitt mittig
- 31: Abschnitt außen
- 32: Technikmodul
- 33: Luftführungsmodul
- 34: Steuereinheit
- 35: Trennwand
- 36: Trennwand
- 37: Luftströmungsausschnitt
- 38: Luftströmungsausschnitt
- 39: Luftströmungsausschnitt
- 40: Luftströmungsausschnitt
- 41: Lüftungsschieber
- 42: Lüftungsschieber
- 43: Öffnung
- 44: Öffnung
- 45: Zahnstangenantrieb
- 46: Zahnstange
- 47: Stirnrad
- 48: Nut
- 49: Nut
- 50: Mittelebene

## Patentansprüche

1. Lüftungsvorrichtung (1) zur Be- und Entlüftung von Räumen eines Gebäudes,
bestehend aus einem in einer Gebäudewand (3) des Gebäudes angeordnetem Gehäuse (2), mit einer zur Rauminnenseite (5) des Gebäudes ersten Seitenfläche (4), welche auf einer unteren Ebene (15) für den Belüftungs- Medienstrom (9) eines ersten unteren Luftströmungskanals (19) eine Austrittsöffnung (26) und für den Entlüftungs-Medienstrom (10) eines zweiten unteren Luftströmungskanals (20) eine Eintrittsöffnung (27) hat und mit einer zur Außenseite (7) des Gebäudes zweiten Seitenfläche (6), welche auf einer oberen
Ebene (14) für den wechselseitigen Be- und Entlüftungs- Medienstrom (9, 10) der oberen Luftströmungskanäle (17, 18) jeweils Ein- und Austrittsöffnungen (24, 25) aufweist, mit einer Wärmespeichereinheit (11) zur Wärmeübertragung aus dem Entlüftungs- Medienstrom (10) auf den Belüftungs-Medienstrom (9), einer Luftfördereinrichtung (8) welche aus einem Zuluftgebläse (21) für den Belüftungs-Medienstrom (9) und aus einem Abluftgebläse (22) für den Entlüftungs-Medienstrom (10) besteht, welche kontinuierlich in einer Luftförderrichtung betrieben werden und mit einer Verschluss- und Öffnungseinrichtung (12) zur Steuerung des Luftstroms,
**dadurch gekennzeichnet,**
**dass** das Gehäuse (2) in der Höhe (H) durch einen Zwischenboden (13) getrennt die obere Ebene (14) und die untere Ebene (15) formiert, wobei das Gehäuse (2) in der Länge (L) in der oberen Ebene (14) durch die Verschluss- und Öffnungseinrichtung (12) und in der unteren Ebene (15) mittels Trennwänden (16) geteilt ist, wodurch sich die zwei oberen Luftströmungskanäle (17, 18) und die zwei unteren Luftströmungskanäle (19, 20) bilden, wobei das Zuluftgebläse (21) und das Abluftgebläse (22) die obere Ebene (14) mit der unteren Ebene (15) verbinden, dass die oberen Luftströmungskanäle (17, 18) zur zweiten Seitenfläche (6) des Gehäuses (2) auf der oberen Ebene (14) jeweils eine Wärmespeichereinheit (11) aufweisen und zwischen der Wärmespeichereinheit (11) und der Außenseite (7) des Gebäudes jeweils ein Zuluftfilterelement (23) zugeordnet ist, wobei jedes Zuluftfilterelement (23) in den Luftströmungskanälen (17, 18) wechselseitig und gegenläufig von dem Be- und Entlüftungs- Medienstrom (9, 10) mit geschalteter Verschluss- und Öffnungseinrichtung (12) durchströmbar ist, und wobei die Luftströmungskanäle (19, 20) in der unteren Ebene (15) von dem Be- und Entlüftungs-Medienstrom (9, 10) gleichbleibend durchströmt werden, wobei zur ersten Seitenfläche (4) des Gehäuses (2) im Bereich der Eintrittsöffnung (27) des zweiten unteren Luftströmungskanals (20) ein Abluftfilterelement (28) angeordnet ist, welches permanent von dem Entlüftungs- Medienstrom (10) durchströmt ist.

2. Lüftungsvorrichtung (1) nach Anspruch 1,
**dadurch gekennzeichnet,**
**dass** das Zuluftgebläse (21) in der unteren Ebene (15) des Gehäuses (2) angeordnet ist, während das Abluftgebläse (22) der oberen Ebene (14) des Gehäuses (2) zugewandt ist.

3. Lüftungsvorrichtung (1) nach Anspruch 1,
**dadurch gekennzeichnet,**
**dass** das Gehäuse (2) über die Länge (L) der Lüftungsvorrichtung (1) in drei Abschnitte (29, 30, 31) modular unterteilt ist, wobei der mittlere Abschnitt (30) ein Technikmodul (32) und die äußeren Abschnitte (29, 31) jeweils ein Luftführungsmodul (33) bereitstellen.

4. Lüftungsvorrichtung (1) nach Anspruch 3,
**dadurch gekennzeichnet,**
**dass** das Technikmodul (32) die Verschluss- und Öffnungseinrichtung (12), das Zu- und Abluftgebläse (21, 22) und eine Steuereinheit (34) aufnimmt, wobei die zwei Luftführungsmodule (33) die jeweiligen Luftströmungskanäle (17, 19; 18, 20) und jeweils eine Wärmespeichereinheit (11) aufweisen, wobei in einem Luftführungsmodul (33) ein Ab- und Zuluftfilterelement (28, 23) und in einem Luftführungsmodul (33) ein Zuluftfilterelement (23) angeordnet ist.

5. Lüftungsvorrichtung (1) nach Anspruch 4,
**dadurch gekennzeichnet,**
**dass** das Technikmodul (32) und die Lüftungsmodule (33) im Gehäuse (2)
verschiebbar geführt an der Seitenfläche (4) zur Rauminnenseite (5) einzeln montier- oder demontierbar sind.

6. Lüftungsvorrichtung (1) nach Anspruch 3,
**dadurch gekennzeichnet,**
**dass** die Unterteilung der drei Abschnitte (29, 30, 31) mittels zweier Trennwände (35, 36) ermöglicht wird, wobei die Trennwände (35, 36) Luftströmungsausschnitte (37, 38, 39, 40) aufweisen, welche den Luftströmungskanälen (17, 18, 19, 20) angepasst ausgebildet ineinander wirkverbunden sind.

7. Lüftungsvorrichtung (1) nach Anspruch 1,
**dadurch gekennzeichnet,**
**dass** die Verschluss- und Öffnungseinrichtung (12) auf der oberen Ebene (14) des Gehäuses (2) angeordnet ein Schließorgan aufweist, welches vorzugsweise von einem Lüftungsschieber (41, 42) gebildet ist, zum Öffnen und Schließen der Luftströmungskanäle (17, 18) für den Be- und Entlüftungs- Medienstrom (9, 10), wobei auf der unteren Ebene (15) der Trennwand (16) Öffnungen (43, 44) für einen permanenten Luftströmungsverlauf vorgesehen sind.

8. Lüftungsvorrichtung (1) nach Anspruch 7,
**dadurch gekennzeichnet,**
**dass** die Verschluss- und Öffnungseinrichtung (12) zur Erzeugung einer nahezu kontinuierlichen Luftführung über die Lüftungsschieber (41, 42) entsprechend schnell schließend und/ oder entsprechend schnell öffnend arbeitend über einen Zahnstangenantrieb (45) betrieben wird.

9. Lüftungsvorrichtung (1) nach Anspruch 8,
**dadurch gekennzeichnet,**
**dass** der Zahnstangenantrieb (45) jeweils aus einer an dem Lüftungsschieber (41, 42) angeordneten Zahnstange (46) und einem mit der Steuereinheit (34) wirkverbundenen Stirnrad (47) eine geradlinige Hin- und Herbewegung des Lüftungsschiebers (41, 42) gestattet.

10. Lüftungsvorrichtung (1) nach Anspruch 7,
**dadurch gekennzeichnet,**
**dass** die Lüftungsschieber (41, 42) an den Seitenflächen (4, 6) des Gehäuses (2) in einer Nut (48, 49) geführt aufgenommen sind und unmittelbar neben dem Zuluft- und Abluftgebläse (21, 22) angeordnet sind.

11. Lüftungsvorrichtung (1) nach Anspruch 7,
**dadurch gekennzeichnet,**
**dass** die Lüftungsschieber (41, 42) während des Betriebszustandes mit zyklischem Richtungswechsel zu den jeweils gegenüberliegenden Seitenflächen (4, 6) des Gehäuses (2) unterschiedliche Endlagestellungen aufweisen.

12. Lüftungsvorrichtung (1) nach Anspruch 7,
**dadurch gekennzeichnet,**
**dass** die Lüftungsvorrichtung (1) durch eine Mittelebene (50) symmetrisch geteilt ist, wobei sich der auf einer Hälfte angeordnete Lüftungsschieber (41) in der Endlagestellung des geöffneten Belüftungs- Medienstroms (9) befindet wobei die eine
Wärmespeichereinheit (11) durchströmt wird und sich der auf der anderen Hälfte angeordnete
Lüftungsschieber (42) in der Endlagestellung des geöffneten Entlüftungs- Medienstroms (10) befindet , wobei die andere Wärmespeichereinheit (11) durchströmt wird, wobei sich mit
einem Wechsel der Endlagestellungen der Lüftungsschieber (41, 42) ein zweiter Betriebszustand einstellt, so dass die jeweilige Wärmespeichereinheit (11) durch den gleichzeitigen Richtungswechsel des Be- und Entlüftungs- Medienstroms (9, 10) in der oberen Ebene (14) von der Gegenrichtung durchströmt wird.

13. Lüftungsvorrichtung (1) nach Anspruch 7,
**dadurch gekennzeichnet,**
**dass** die Verschluss- und Öffnungseinrichtungen (12) zum Betätigen der Lüftungsschieber (41, 42) mittels eines elektromotorischen Antriebs betrieben werden, welche im Technikmodul (32) angeordnet sind.

14. Lüftungsvorrichtung (1) nach wenigstens Anspruch 12,
**dadurch gekennzeichnet,**
**dass** die während des Betriebszustandes kontinuierlich arbeitenden Gebläse (21, 22) der Luftfördereinrichtung (8) Radialventilatoren sind, wobei die lotrechte Mittelebene (50) der Lüftungsvorrichtung (1) die mittige Anordnung der räumlich getrennten Gebläse (21, 22) bildet.

15. Lüftungsvorrichtung (1) nach Anspruch 1,
**dadurch gekennzeichnet,**
**dass** die jeweiligen Wärmespeichereinheiten (11) aus einer keramischen, einer metallischen oder einer Kunststoff gefertigten Speichermasse bestehen.

16. Verfahren zum Betrieb einer Lüftungsvorrichtung (1) nach einem der vorstehenden Ansprüche,
**dadurch gekennzeichnet,**
**dass** die wechselnde Durchströmung der Wärmespeichereinheiten (11) durch einen Tausch der Lüftungswege des Be- und Entlüftungs- Medienstroms (9, 10) in der oberen Ebene (14) des Gehäuses (2) der Lüftungsvorrichtung (1) unter Beibehaltung der Förderrichtung der Gebläse (21, 22) erreicht wird und durch Beibehaltung der unteren Luftströmungskanäle (19, 20) zu den Gebläsen (21, 22) der Be- und Entlüftungs-Medienstrom (9, 10) in der unteren Ebene (15) die unteren Lufströmungskanäle (19, 20) in der unteren Ebene gleichbleibend durchströmt.

## Claims

1. A ventilation device (1) for aerating and deaerating rooms of a building, comprising a housing (2) arranged in a building wall (3) of the building having a first side face (4) towards the rooms' interior (5) of the building, which, at a lower level (15), has an outlet opening (26) for the aeration media flow (9) of a first lower airflow channel (19) and an inlet opening (27) for the deaeration media flow (10) of a second lower airflow channel (20), and having a second side face (6) towards the exterior (7) of the building, which, at an upper level (14), respectively has inlet and outlet openings (24, 25) for the reciprocal aeration and deaeration media flows (9, 10) of the upper airflow channels (17, 18), having a heat storage unit (11) for transferring heat from the deaeration media flow (10) to the aeration media flow (9), an air-conveying device (8), comprising a supply air fan (21) for the aeration media flow (9) and an exhaust air fan (22) for the deaeration media flow (10), which are continuously operated in an air-conveying direction, and having a closing and opening device (12) for controlling the airflow,
**characterized in that**
the housing (2), separated by an intermediate bottom (13) at a height (H), forms the upper level (14) and the lower level (15), wherein the housing (2), at a length (L), is divided by the closing and opening device (12) at the upper level (14) and by means of separating walls (16) at the lower level (15), forming the two upper airflow channels (17, 18) and the two lower airflow channels (19, 20), wherein the supply air fan (21) and the exhaust air fan (22) connect the upper level (14) with the lower level (15), and
the upper airflow channels (17, 18) towards the second side face (6) of the housing (2) respectively have a heat storage unit (11) at the upper level (14) and a supply air filter element (23) is respectively allocated between the heat storage unit (11) and the exterior (7) of the building, wherein each supply air filter element (23) in the airflow channels (17, 18) can be flowed through reciprocally and inversely by the aeration and deaeration media flows (9, 10) by switching the closing and opening device (12), and wherein the airflow channels (19, 20) at the lower level (15) are consistently flowed through by the aeration and deaeration media flows (9, 10), wherein an exhaust air filter element (28) is arranged towards the first side face (4) of the housing (2) in the area of the inlet opening (27) of the second lower airflow channel (20), which is permanently flowed through by the deaeration media flow (10).

2. The ventilation device (1) according to claim 1,
**characterized in that**
the supply air fan (21) is arranged at the lower level (15) of the housing (2), while the exhaust air fan (22) is facing the upper level (14) of the housing (2).

3. The ventilation device (1) according to claim 1,
**characterized in that**
the housing (2) is modularly subdivided into three sections (29, 30, 31) across the length (L) of the ventilation device (1), wherein the central section (30) provides a technology module (32) and the outer sections (29, 31) each provide an air routing module (33).

4. The ventilation device (1) according to claims 1 and 3,
**characterized in that**
the technology module (32) houses the closing and opening device (12), the supply and exhaust air fans (21, 22) and a control unit (34), wherein the two air routing modules (33) comprise the respective airflow channels (17, 19; 18, 20) und each have a heat storage unit (11), wherein in one air routing module (33), an exhaust and supply air filter element (28, 23) is arranged, and in one air routing module (33), a supply air filter element (23) is arranged.

5. The ventilation device (1) according to claim 3,
**characterized in that**
the technology module (32) and the air routing modules (33) in the housing (2), displaceably guided at the side face (4) towards the rooms' interior (5), can be individually assembled or disassembled.

6. The ventilation device (1) according to claim 3,
**characterized in that**
the subdivision of the three sections (29, 30, 31) is enabled by means of two separating walls (35, 36), wherein the separating walls (35, 36) have airflow cut-outs (37, 38, 39, 40), which, adapted to the airflow channels (17, 18, 19, 20), are operatively connected one inside the other.

7. The ventilation device (1) according to claim 1,
**characterized in that**
the closing and opening device (12) has a shut-off element arranged at the upper level (14) of the housing (2), preferably formed by a ventilation gate valve (41, 42), for opening and closing the airflow channels (17, 18) for the aeration and deaeration media flows (9, 10), wherein openings (43, 44) for a permanent airflow path are provided at the lower level (15) of the separating wall (16).

8. The ventilation device (1) according to claim 7,
**characterized in that**
the closing and opening device (12) is operated via a rack and pinion drive (45) to work respectively fast-closing and/or respectively fast-opening for generating almost continuous air routing via the ventilation gate valves (41, 42).

9. The ventilation device (1) according to claim 8,
**characterized in that**
the rack and pinion drive (45) respectively allows for a rectilinear reciprocating motion of the ventilation gate valve (41, 42) with a gear rack (46) arranged at the ventilation gate valve (41, 42) and a spur gear (47) operatively connected with the control unit (34).

10. The ventilation device (1) according to claim 7,
**characterized in that**
the ventilation gate valves (41, 42) are received at the side faces (4, 6) of the housing (2) guided in a groove (48, 49) and are arranged immediately adjacent to the supply air and exhaust air fans (21, 22).

11. The ventilation device (1) according to claim 7,
**characterized in that**
the ventilation gate valves (41, 42) have different end positions whilst in the operating state with a cyclical change of direction towards the respectively opposite side faces (4, 6) of the housing (2).

12. The ventilation device (1) according to claim 7,
**characterized in that**
the ventilation device (1) is symmetrically divided by a center plane (50), wherein the ventilation gate valve (41) arranged in one half is located in the end position of the opened aeration media flow (9), wherein one heat storage unit (11) is flowed through, and the ventilation gate valve (42) arranged in the other half is located in the end position of the opened deaeration media flow (10), wherein the other heat storage unit (11) is flowed through, wherein, upon switching the end positions of the ventilation gate valves (41, 42), a second operating state sets in, so that the respective heat storage unit (11) is flowed through from the opposite direction with the simultaneous change in direction of the aeration and deaeration media flows (9, 10) at the upper level (14).

13. The ventilation device (1) according to claim 7,
**characterized in that**
the closing and opening devices (12) for actuating the ventilation gate valves (41, 42) are operated by means of an electromotive drive, which is arranged in the technology module (32).

14. The ventilation device (1) according to at least claim 12,
**characterized in that**
the fans (21, 22) of the air-conveying device (8) continuously working during the operating state are radial fans, wherein the perpendicular center plane (50) of the ventilation device (1) forms the central arrangement of the spatially separated fans (21, 22).

15. The ventilation device (1) according to claim 1,
**characterized in that**
the respective heat storage units (11) consist of a storage mass made from ceramic, metallic or plastic materials.

16. A method for operating a ventilation device (1) according to any one of the preceding claims,
**characterized in that**
the alternating through-flow of the heat storage units (11) is achieved by switching the ventilation paths of the aeration and deaeration media flows (9, 10) at the upper level (14) of the housing (2) of the ventilation device (1) while maintaining the conveying direction of the fans (21, 22), and, by maintaining the lower airflow channels (19, 20) to the fans (21, 22), the aeration and deaeration media flows (9, 10) consistently flow through at the lower level (15).

## Revendications

1. Dispositif de ventilation (1) pour alimenter en air et évacuer l'air des pièces dans un bâtiment, constitué d'un boîtier (2) disposé dans un mur (3) du bâtiment, comportant une première surface latérale (4) à l'intérieur de la pièce (5) du bâtiment, qui a une ouverture de sortie (26) sur un niveau inférieur (15) pour le flux de fluide d'air d'alimentation (9) d'un premier canal d'écoulement d'air inférieur (19), et qui a une ouverture d'entrée (27) pour le flux de fluide d'évacuation d'air (10) d'un deuxième canal d'écoulement d'air inférieur (20), et une deuxième surface latérale (6) à l'extérieur (7) du bâtiment, qui comporte des ouvertures d'entrée et de sortie (24, 25) à un niveau supérieur (14) pour le flux alterné de fluide d'alimentation et d'évacuation d'air (9, 10) respectif des canaux d'écoulement d'air supérieurs (17, 18), avec une unité de stockage de chaleur (11) pour le transfert de la chaleur du flux de fluide d'évacuation d'air (10) vers le flux de fluide d'air d'alimentation (9), un dispositif de transport d'air (8) qui se compose d'un ventilateur d'air d'alimentation (21) pour le flux de fluide de ventilation (9) et d'un ventilateur d'extraction d'air (22) pour le flux de fluide d'extraction d'air (10), qui fonctionne en continu dans une direction de transport d'air, et d'un dispositif de fermeture et d'ouverture (12) pour piloter le flux d'air,
**caractérisé en ce que**
le boîtier (2) forme sur sa hauteur (H) le niveau supérieur (14) et le niveau inférieur (15) séparés par un étage intermédiaire (13), le boîtier (2) est subdivisé sur sa longueur (L) sur le niveau supérieur (14) par les dispositifs de fermeture et d'ouverture (12), et sur le niveau inférieur (15) par des cloisons de séparation (16), ce qui permet de se former les deux canaux d'écoulement d'air supérieurs (17, 18) et les deux canaux d'écoulement d'air inférieurs (19, 20), de sorte que le ventilateur d'air d'alimentation (21) et le ventilateur d'extraction d'air (22) relient le niveau supérieur (14) au niveau inférieur (15), que les canaux d'écoulement d'air supérieurs (17, 18) sur la deuxième surface (6) du boîtier (2) au niveau supérieur (14) comportent respectivement une unité de stockage de chaleur (11), et qu'un élément d'air d'alimentation (23) est disposé respectivement entre l'unité de stockage de chaleur (11) et le côté extérieur (7) du bâtiment, de telle sorte que chaque élément d'air d'alimentation (23) dans les canaux d'écoulement d'air (17, 18) peut être traversé alternativement et dans le sens contraire par le flux de fluide d'alimentation et d'évacuation d'air (9, 10) par la commutation du dispositif de fermeture et d'ouverture (12), et que les canaux d'écoulement d'air (19, 20) sont constamment traversés au niveau inférieur (15) par le flux alterné de fluide d'alimentation et d'évacuation d'air (9, 10), de sorte que sur la première surface latérale (4) du bâtiment (2), dans la zone de l'ouverture d'admission (27) du deuxième canal d'écoulement d'air inférieur (20) est installé un élément de filtre d'évacuation d'air (28) qui est traversé en permanence par le flux de fluide d'évacuation d'air (10).

2. Dispositif de ventilation (1) selon la revendication 1,
**caractérisé en ce que**
le ventilateur d'air d'alimentation (21) est disposé au niveau inférieur (15) du boîtier (2), tandis que le ventilateur d'extraction d'air (22) est tourné vers le niveau supérieur (14) du boîtier (2).

3. Dispositif de ventilation (1) selon la revendication 1,
**caractérisé en ce que**
le boîtier (2) est subdivisé de manière modulaire en trois sections (29, 30, 31) sur la longueur (L) du dispositif de ventilation (1), la partie médiane (30) étant un module technologique (32) et les sections extérieures (29, 31) mettant respectivement à disposition un module de guidage de l'air (33).

4. Dispositif de ventilation (1) selon les revendications 1 et 3,
**caractérisé en ce que**
le module technologique (32) accueille le dispositif de fermeture et d'ouverture (12), le ventilateur d'alimentation et d'extraction d'air (21, 22) et une unité de commande (34), les deux modules de guidage d'air (33) comportant les canaux d'écoulement d'air respectifs (17, 19; 18, 20) et chacun une unité de stockage de chaleur (11), dans lequel un élément d'extraction d'air et d'alimentation en air (28, 23) est installé dans un module de guidage de l'air (33) et un élément de filtre d'alimentation en air (23) est installé dans ce module de guidage de l'air (33).

5. Dispositif de ventilation (1) selon la revendication 3,
**caractérisé en ce que**
dans le boîtier (2), le module technologique (32) et les modules de guidage de l'air (33) sont logés de manière coulissante pour pouvoir être montés et démontés individuellement sur la surface latérale (4) sur le côté intérieur de la pièce (5).

6. Dispositif de ventilation (1) selon la revendication 3,
**caractérisé en ce que**
la subdivision des trois sections (29, 30, 31) au moyen de deux cloisons de séparation (35, 36) est rendue possible, les parois de séparation (35, 36) comportant des découpes de circulation d'air (37, 38, 39, 40) qui sont fonctionnellement reliées les unes aux autres de manière adaptée aux canaux d'écoulement d'air (17, 18, 19, 20) .

7. Dispositif de ventilation (1) selon la revendication 1,
**caractérisé en ce que**
le dispositif de fermeture et d'ouverture (12) comporte un organe de fermeture installé au niveau supérieur (14) du boîtier (2), organe qui est constitué de préférence par une glissière de ventilation (41, 42) conçue pour ouvrir et fermer les canaux d'écoulement d'air (17, 18) pour l'écoulement des flux d'alimentation et d'évacuation d'air (9, 10), dans lesquels des ouvertures (43, 44) sont prévues au niveau inférieur (15) de la cloison de séparation (16) pour permettre un écoulement permanent des flux d'air.

8. Dispositif de ventilation (1) selon la revendication 7,
**caractérisé en ce que**
le dispositif de fermeture et d'ouverture (12) est actionné par un entraînement à crémaillère (45) pour générer un flux d'air quasiment continu via les glissières de ventilation (41, 42) qui se ferment rapidement en conséquence et/ou s'ouvrent rapidement en conséquence.

9. Dispositif de ventilation (1) selon la revendication 8,
**caractérisé en ce que**
l'entraînement à crémaillère (45) se compose respectivement d'une crémaillère (46) installée sur la glissière de ventilation (41, 42) et d'une roue dentée droite (47) raccordée fonctionnellement à l'unité de commande (34) pour permettre un mouvement rectiligne de va-et-vient du volet de ventilation (41, 42).

10. ' Dispositif de ventilation (1) selon la revendication 7,
**caractérisé en ce que**
les volets de ventilation (41, 42) sont logés guidés dans une rainure (48, 49) sur les surfaces latérales (4, 6) du boîtier (2) et directement placés à côté des ventilateurs d'alimentation et d'extraction d'air (21, 22).

11. Dispositif de ventilation (1) selon la revendication 7,
**caractérisé en ce que**
pendant l'état de fonctionnement avec des changements de direction cycliques, les volets de ventilation (41, 42) occupent des positions de fin de course différentes par rapport aux surfaces latérales opposées (4, 6) du boîtier (2).

12. Dispositif de ventilation (1) selon la revendication 7,
**caractérisé en ce que**
le dispositif de ventilation (1) est subdivisé symétriquement par un niveau central (50) sur lequel le volet de ventilation (41) placé sur une moitié se trouve dans la position de fin de course du flux de fluide de ventilation ouvert (9), si bien que l'une des deux unités de stockage de chaleur (11) est traversée par le flux, et le volet d'aération (42) placé sur l'autre moitié se trouve dans la position de fin de course du flux de fluide d'évacuation d'air ouvert (10), de sorte que l'autre unité de stockage de chaleur (11) est traversée par le flux, si bien qu'en cas de changement des positions de fin de course des volets de ventilation (41, 42), il se produit un deuxième état de fonctionnement tel que l'unité de stockage de chaleur respective (11) est traversée dans le sens inverse par suite du changement de direction simultané du flux des fluides d'alimentation et d'évacuation d'air (9, 10) au niveau supérieur (14)..

13. Dispositif de ventilation (1) selon la revendication 7,
**caractérisé en ce que**
les dispositifs de fermeture et d'ouverture (12) qui sont disposés dans le module technologique (32) sont actionnées au moyen d'un entraînement par moteur électrique pour actionner les volets de ventilation (41, 42).

14. Dispositif de ventilation (1) selon au moins la revendication 12,
**caractérisé en ce que**
les ventilateurs (21, 22), qui fonctionnent en continu pendant l'état de fonctionnement du dispositif de transport d'air (8) sont des ventilateurs radiaux, le niveau central vertical (50) du dispositif de ventilation (1) constituant la disposition centrale des ventilateurs séparés sur le plan spatial (21, 22).

15. Dispositif de ventilation (1) selon la revendication 1,
**caractérisé en ce que**
les accumulateurs de chaleur respectifs (11) sont une masse de stockage fabriquée en céramique, en métal ou en plastique.

16. Procédé de fonctionnement d'un dispositif de ventilation (1) selon l'une des revendications précédentes,
**caractérisé en ce que**
le flux alternatif qui traverse les unités de stockage de chaleur (11) est obtenu par le biais d'un remplacement des voies de ventilation du flux de fluide d'alimentation et d'extraction d'air (9, 10) au niveau supérieur (14) du boîtier (2) du dispositif de ventilation (1), tout en maintenant la direction d'acheminement du ventilateur (21, 22), et en maintenant de manière constante l'écoulement des flux d'alimentation et d'évacuation d'air (9, 10) au niveau inférieur (15).
